Europäisches Patentamt

European Patent Office

Office européen des brevets

(19)

(11) Numéro de publication : **0 191 811 B1**

(12) **FASCICULE DE BREVET EUROPÉEN**

(45) Date de publication du fascicule du brevet :
07.03.90

(51) Int. Cl.⁵ : $B\ 60\ B\quad 5/02$, $B\ 60\ B\quad 1/00$

(21) Numéro de dépôt : 85904006.5

(22) Date de dépôt : 19.08.85

(86) Numéro de dépôt international :
PCT/FR 85/00225

(87) Numéro de publication internationale :
WO/8601463 (13.03.86 Gazette 86/06)

(54) ENSEMBLE DE MATERIAUX COMPOSITES CONSTITUANT UNE JANTE DE ROUE A RAYONS.

(30) Priorité : 21.08.84 FR 8413024
19.08.85 FR 8512496

(43) Date de publication de la demande :
27.08.86 Bulletin 86/35

(45) Mention de la délivrance du brevet :
07.03.90 Bulletin 90/10

(84) Etats contractants désignés :
AT BE CH DE FR GB IT LI LU NL SE

(56) Documents cités :
FR–A– 806 474
FR–A– 993 303
FR–A– 994 459
FR–A– 1 289 921
FR–A– 1 332 603
NL–A– 7 906 928
US–A– 4 030 754

(73) Titulaire : **Viellard, Paul Henri**
**11, rue de Sontay**
**F-75116 Paris (FR)**

(72) Inventeur : **Viellard, Paul Henri**
**11, rue de Sontay**
**F-75116 Paris (FR)**

(74) Mandataire : **Hud, Robert**
**Cabinet COLLIGNON 6, rue de Madrid**
**F-75008 Paris (FR)**

Jouve, 18, rue St-Denis, 75001 Paris, France

**Description**

Il est clair que plus une bicyclette est légère, meilleures seront les performances du cycliste. Pour alléger l'ensemble de la bicyclette, il faut en alléger les éléments constitutifs mais il ne faut pas rendre l'ensemble fragile.

Ainsi, on peut alléger successivement cadre, guidon, roue. L'allégement des roues d'une bicyclette présente pour l'utilisateur des avantages importants non seulement pour une raison de moindre poids à entraîner, moindre inertie de la roue qui permet également de meilleures accélérations, mais aussi pour une raison de maintien de l'équilibre du cycliste : plus la roue avant est légère, meilleur est l'équilibre.

Pour alléger la jante, on peut envisager d'utiliser les fibres de carbone associées à des résines, mais celles-ci présentent deux défauts : lorsqu'elles se brisent, elles entraînent la destruction brutale et presque complète de la jante, pouvant provoquer la chute du cycliste ; enfin les fibres de carbone s'usent rapidement au frottement des patins de freinage.

L'invention a pour objet de remédier à ces inconvénients.

D'autre part, par le document NL-A-7 906 928 on connaît une jante de roue à rayons qui est réalisée en un matériau comprenant des fibres de verre noyées dans de la résine et qui est constituée en deux parties évidées à l'intérieur. Dans le logement interne de cette jante est disposée une couronne métallique unique qui absorbe la pression radiale exercée par l'écrou de fixation de chaque rayon en empêchant celui-ci de traverser la matière de la jante.

Selon l'invention, la jante de roue à rayons est réalisée en un matériau composite comprenant des fibres noyées dans de la résine, avec une couronne en un matériau résistant au choc qui est disposée à l'intérieur dudit matériau composite et qui reçoit la pression radiale des têtes d'écrous bloquant les rayons de la roue, et elle se caractérise par le fait que les fibres sont des fibres de carbone et par le fait qu'au moins une autre couronne en un matériau résistant au choc est disposée à l'intérieur du matériau composite ou en périphérie de celui-ci, de façon que les fibres de carbone soient constamment pincées entre lesdites couronnes sous la pression des têtes pour assurer une bonne cohésion du matériau composite même en cas de rupture des fibres.

Par ailleurs, pour permettre le frottement des patins de freinage il est prévu soit de disposer un revêtement métallique ou d'une autre nature synthétique sur les faces latérales de la jante, soit de faire recouvrir ces faces latérales d'une couche de fibres de verre ou de synthèse associées à des résines, ces corps résistant bien au frottement des patins de freinage.

Pour bien faire comprendre l'invention, on en décrira ci-après brièvement des exemples d'exécution sans caractère limitatif, en référence aux dessins schématiques annexés dans lesquels :

la figure 1 est une coupe suivant la tranche de la jante ;

la figure 2 est une coupe en tranche aussi mais au niveau de passage de la valve de gonflage ;

les figures 3 et 4 sont des coupes suivant la tranche de la jante au niveau du passage d'un rayon, chacune de ces figures est une variante du dispositif.

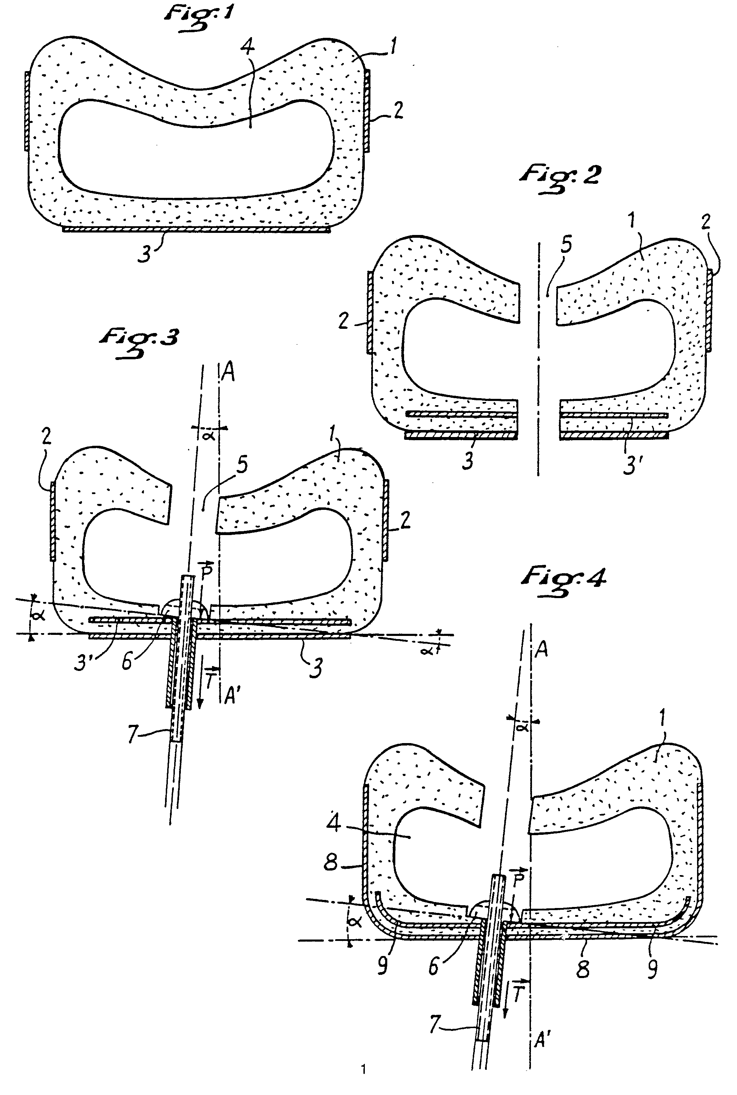

Le dispositif représenté sur la figure 1 est constitué de fibres de carbone (1) associées à des résines constituant la jante enfermant une poche (4) qui peut être soit vide soit remplie d'une mousse durcie d'une grande légèreté ayant été injectée dans le seul but de réaliser le moulage de la jante.

Ladite jante reçoit sur sa partie extérieure une plaque métallique (3) collée lors de la polymérisation des résines associées aux fibres de carbone et des plaques (2) métalliques ou d'une autre matière notamment vernis, peinture, plastique, posées sur les faces extérieures droite et gauche, latérales de la jante (1) et destinées à recevoir le frottement des patins de freinage.

La plaque métallique (3) est ici représentée plane mais elle pourrait avoir tout autre espèce de profil lui assurant une meilleure rigidité et une meilleure tenue aux efforts de torsion ou de cisaillement.

La figure 2 montre le trou circulaire (5) par lequel viendra passer la valve de gonflage du boyau et une plaque métallique (3') qui est noyée dans les fibres de carbone (1).

La figure 3 représente la réalisation du montage d'un rayon (7) sur une jante exécutée selon le profil décrit sur la figure 2. Le trou (5) par lequel est introduit l'écrou de serrage (6) du rayon (7). Cet écrou (6) encaisse la tension $\overline{T}$ exercée par le rayon (7) et exerce ainsi une pression $\overline{P}$ sur les fibres de carbone sous-jacentes qui se trouvent ainsi comprimées entre les plaques métalliques (3 et 3'). Ce pincement maintient la cohésion de la bande interne de la jante évitant la destruction de la roue en cas de choc. Ces couronnes métalliques (3 et 3') font également obstacle à l'usure des fibres de carbone au niveau du passage de l'écrou (6) dans la jante.

La figure 4 est une coupe en tranche de la jante et d'un rayon (7) selon son axe diamétral. Elle est une variante de la jante précédente en ce qu'elle reçoit sur sa partie extérieure une couche de fibres de verre (8) ou aramides ou hybride de fibres de carbone et de fibres aramides ou d'autres fibres de synthèse ayant une bonne résistance au choc et aux frottements des patins de freinage sur les zones latérales de la jante.

D'autres couches pourraient encore être disposées. La tête de l'écrou (6) qui encaisse la tension $\overline{T}$ exercée par le rayon (7) vient appuyer sur la couche (9) de fibres de verre ou aramides ou d'autres fibres de synthèse ayant une bonne résistance au choc et comprime les fibres de carbone situées entre elle (9) et la couche (8) assurant une bonne cohésion de l'ensemble constituant la jante. On observe que la surface d'appui de la tête de l'écrou (6) fait un angle α avec les couches de fibres (8) et (9). Cet angle α est fonction du rayon de la jante et de la largeur de l'axe de la roue. Les rayons sont montés alternativement à droite et à gauche de l'axe (A) de la roue.

**Revendications**

1. Jante de roue à rayons réalisée en un matériau composite comprenant des fibres (1) noyées dans de la résine, avec une couronne (3', 9) en un matériau résistant au choc qui est disposée à l'intérieur dudit matériau composite et qui reçoit la pression radiale des têtes (6) d'écrous bloquant les rayons (7) de la roue, caractérisée par le fait que les fibres (1) sont des fibres de carbone et par le fait qu'au moins une autre couronne (3, 8) en un matériau résistant au choc est disposée à l'intérieur du matériau composite ou en périphérie de celui-ci, de façon que les fibres de carbone (1) soient constamment pincées entre lesdites couronnes (3, 3'-8, 9) sous la pression des têtes (6) pour assurer une bonne cohésion du matériau composite même en cas de rupture des fibres (1).

2. Jante selon la revendication 1, caractérisée en ce que l'une au moins (3) desdites couronnes est réalisée en métal et présente une forme plane ou un autre profil lui assurant une meilleure rigidité ou une meilleure tenue aux efforts de torsion ou de cisaillement.

3. Jante selon la revendication 1, caractérisée en ce que ses parties périphériques extérieures droite et gauche (2) supportent une surface métallique ou un vernis, une peinture, un plastique résistant bien au frottement.

4. Jante selon la revendication 1, caractérisée en ce que ladite autre couronne (8) est constituée de fibres résistant bien aux frottements et est disposée en périphérie de la jante pour recouvrir les faces latérales droite et gauche de celle-ci qui supportent les pressions et frottements des patins de freinage.

**Claims**

1. A rim for a spoked wheel, which is made of a composite material including fibres (1) embedded in resin and has a ring (3', 9) of shock-resistant material situated within the composite material and bearing the radial pressure of the heads (6) of the nipples for clamping the spokes (7) of the wheel, characterised in that the fibres (1) are carbon fibres and in that at least one further ring (3, 8) of shock-resistant material is situated within or on the periphery of the composite material so that the carbon fibres (1) are constantly gripped between the rings (3, 3'-8, 9) by the pressure of the heads (6) so as to ensure good cohesion of the composite material even in the event of breakage of the fibres (1).

2. A rim according to Claim 1, characterised in that at least one (3) of the rings is made of metal and is flat or has some other profile which provides it with improved rigidity or improved resistance to torsional or shear stresses.

3. A rim according to Claim 1, characterised in that its right-hand and left-hand outer peripheral parts (2) support metallic surfaces, or a varnish, paint or plastics material with good abrasion resistance.

4. A rim according to Claim 1, characterised in that the further ring (8) is made from fibres with good abrasion resistance and is situated on the periphery of the rim so as to cover its right-hand and left-hand side faces which withstand the pressure and friction of the brake blocks.

**Patentansprüche**

1. Speichenradfelge aus Verbundwerkstoff mit Fasern (1), die in Harz eingebettet sind, mit einem Ring (3', 9) aus stoßfestem Werkstoff, der im Inneren des Verbundwerkstoffs eingebettet ist und den radialen Druck von Köpfen (6) von Muttern zur Sicherung der Radspeichen (7) aufnimmt, dadurch gekennzeichnet, daß die Fasern (1) Kohlenstoffasern sind, und daß mindestens ein zweiter Ring (3, 8) aus stoßfestem Werkstoff im Inneren des Verbundmaterials bzw. an dessen Außenumfang so angeordnet ist, daß die Kohlenstoffasern ununterbrochen unter dem Druck der Mutternköpfe (6) zwischen den Ringen (3, 3'-8, 9) so festgeklemmt sind, daß auch bei Bruch der Fasern (1) ein guter Zusammenhang des Verbundwerkstoffs gewährleistet ist.

2. Speichenradfelge nach Anspruch 1, dadurch gekennzeichnet, daß mindestens einer (3) der Ringe aus Metall besteht und eine ebene Form bzw. ein anderes Profil aufweist, das seine erhöhte Steifigkeit bzw. erhöhte Widerstandsfähigkeit gegenüber Verwindungs- oder Scherkräften sicherstellt.

3. Speichenradfelge nach Anspruch 1, dadurch gekennzeichnet, daß auf ihrem rechten und linken (2) äußeren Umfangsabschnitt eine Metallfläche bzw. ein Firnis, eine Farbschicht oder ein gut abriebfester Kunststoff aufgebracht ist.

4. Speichenradfelge nach Anspruch 1, dadurch gekennzeichnet, daß der andere Ring (8) aus hoch abriebfesten Fasern besteht und so auf dem Umfang der Felge angeordnet ist, daß er die rechts und links liegenden Seitenflächen der Felge trägt, die den Druck und die Reibung durch die Bremsklötze aufnehmen.

EP 0 191 811 B1

Fig.1

Fig.2

Fig.3

Fig.4